# EUROPEAN PATENT SPECIFICATION

(11) **EP 1 891 258 B1**
(45) Date of publication and mention of the grant of the patent: **28.11.2012**
(21) Application number: 06725968.9
(22) Date of filing: 24.05.2006
(51) Int. Cl.: D04H 1/00, F16L 59/02, F16L 59/14, F16L 59/04, D04H 1/76

(54) **METHOD AND APPARATUS FOR MANUFACTURING A MINERAL WOOL PIPE SECTION FOR INSULATING PURPOSES**
VERFAHREN UND VORRICHTUNG ZUR HERSTELLUNG EINES ROHRABSCHNITTS AUS MINERALWOLLE FÜR ISOLIERZWECKE
PROCEDE ET APPAREIL DE FABRICATION D'UNE SECTION DE TUYAU EN LAINE MINERALE A DES FINS D'ISOLATION

(30) Priority: 31.05.2005 FI 20055268
(43) Date of publication of application: 27.02.2008
(73) Proprietor: Paroc Oy Ab, 00621 Helsinki (FI)
(72) Inventor: BULUT, Pirkko, FI-53300 Lappeenranta (FI); KARJALAINEN, Erkki, FI-53300 Lappeenranta (FI); MANNINEN, Jukka, FI-53500 Lappeenranta (FI); NIKKINEN, Matti, FI-53500 Lappeenranta (FI); SKIPPARI, Sami, FI-53500 Lappeenranta (FI); KUUKKA, Ossi, FI-53650 Lappeenranta (FI)
(74) Representative: LEITZINGER OY
(86) International application number: PCT/FI2006/050211
(87) International publication number: WO 2006/128964

(56) References cited:
- EP-A1- 0 001 963
- EP-A1- 0 652 318
- DE-A1- 4 212 117
- DE-A1- 19 704 988
- FR-A- 1 073 587
- US-A- 3 147 165
- US-A- 3 341 890
- US-A- 3 912 572
- US-A- 4 029 461
- US-A- 4 401 610

## Description

One object is a method for manufacturing a mineral wool pipe section for insulation purposes.

Another object is a method for curing a mineral wool pipe section preform.

A still further is a pipe section forming apparatus for making mineral wool pipe sections for insulating purposes.

A further object is the use of an aparatus for implementing this method.

Engineering of pipe sections is currently based on winding a single pipe section preform and curing it by using gas-burner generated heat as curing energy. US-A-3147165 and EP-A-0001963 disclose a method of forming a tubular mineral wool preform from loose material fed into the space between a core and a tubular external mould and heated with gas burners generating the curving heat. Although quite efficient today, the process also has its inherent weaknesses. Notable among these are a loss of material (sawed-off ends), a bulky machine size (extensive curing air pipework, a multitude of cores and moulds), as well as a regular cleaning requirement for the curing pipework. In addition, the curing process releases emissions to the atmosphere, the amount of which should be reduced in the future.

The manufacturing technology is based on a continuous process. Thereby, the loss of material is totally avoided. In addition, the machine is structurally simplified, the number of cores being reduced and the moulds becoming simpler. Introduced as a method is microwave curing, which again simplifies the apparatus, eliminates the cleaning problem (no extensive pipework), and conserves energy and brings down emissions.

In order to achieve the foregoing benefits, the method for manufacturing a mineral wool pipe section for insulating purposes is characterized in that wool in the form of loose material is fed into a space between a core and a substantially tubular external mould surrounding it, the result being a substantially tubular insulation preform.

In order to achieve the foregoing benefits, the method for curing a mineral wool pipe section preform is characterized in that the curing is effected by microwave irradiation.

In order to achieve the foregoing benefits, the pipe section is characterized in that it has been manufactured by this method.

In order to achieve the foregoing benefits, the pipe section forming apparatus for making pipe sections of mineral wool is characterized in that it comprises a pipe section forming section, consisting of a core heatable at least over a part thereof and of a tubular external mould surrounding it and being heatable at least over a part thereof, the pipe section being formable in a space between these from wool fed into said space in the form of loose material.

Additionally, in order to achieve the foregoing benefits, the use of the apparatus is characterized in that it is used for implementing this manufacturing method.

Benefits provided include:
- easier transition from grade to grade, number of cores just one/diameter and number of moulds substantially reduced (can be adjustable)
- shorter transition time from grade to grade
- apparatus is simplified and downsized
- higher throughput
- no loss of material
- no quality variation
- no pipeworks to be cleaned - energy conservation investment costs are reduced
- less demand for process control
- required number of operators is reduced.

Preferred embodiments are specifically characterized by what is presented in the dependent claims hereinafter.

Other preferred features can also be found in solutions described subsequently by way of examples and drawings associated therewith.

In the drawings,
- fig. 1: shows an apparatus according to the invention, wherein the feeding of wool is effected by means of gravity and a feed screw,
- fig. 2: shows an apparatus according to the invention, wherein the feeding of wool is effected by means of a blower and a feed screw, and
- fig. 3: shows a cross-section for a pipe section forming section according to the invention, containing a pipe section preform and taken at any point between a smooth section of the core and the external mould.

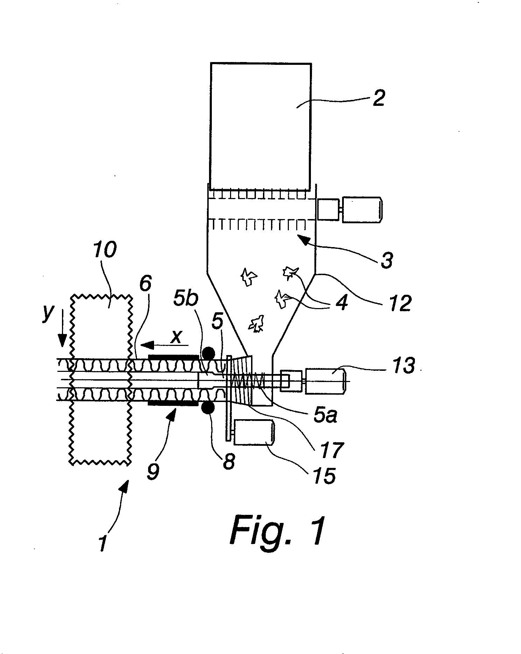

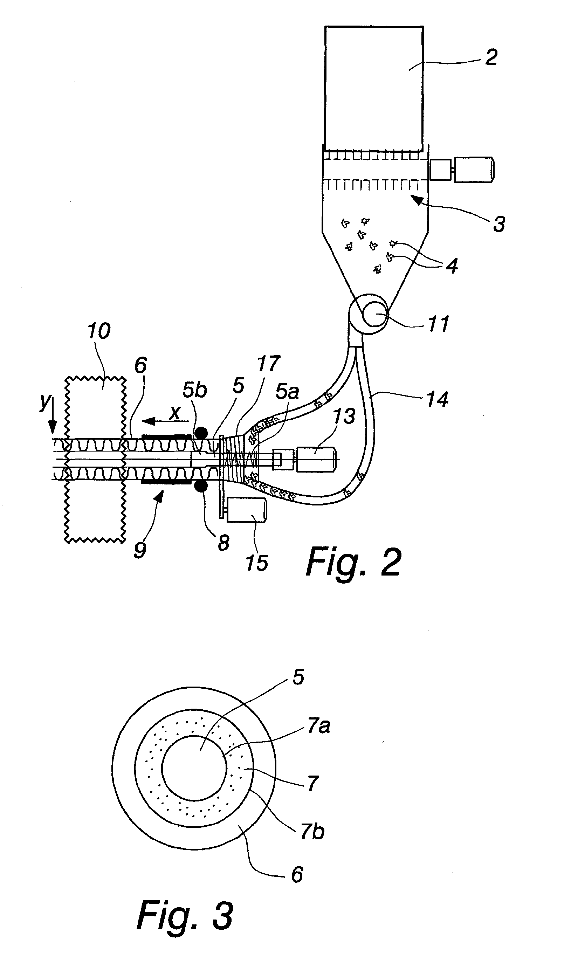

The basic principle of a pipe section forming apparatus is depicted in general figures 1, 2 and 3. The raw material is supplied to a pipe section forming section or apparatus 1 the same way as at present, in rolls of uncured wool 2. Of course, the pipe section forming apparatus 1 can be installed as an extension to a basic wool processing line (not shown), thus avoiding a separate treatment of the rolls 2. If treated, the rolls 2 are first passed to a shredder 3 which chops the rolls into loose material 4, e.g. into small dabs 4. These are conveyed to the actual pipe section forming section 1 either by gravity through a transfer bin 12 (apparatus in upright position, fig. 1) or by means of a blower 11 (fig. 2) through one or more transfer channels 14. If the blower 11 is used, the pipe section forming section 1 of an apparatus must be provided with air venting means, preferably an opening around the power shaft of a drive motor 13 for a core 5 at the wider end of a feeding collar 17. The purpose of blowing is to ensure a transfer of the raw material to an actual pipe section forming process. The blower also enables creating a force (=pressure) capable of moving the pipe section in axial direction. Therefore, the size of a control opening must be adjustable.

The pipe section forming section 1 consists of an inner tube (core) 5, which is screw-shaped in its initial section 5a and smooth in its final section 5b. The screw-shaped section 5a moves a pipe section preform 7 (see fig. 3) continuously forward (direction arrow x). The screw (core) is driven by a motor 13. The pipe section forming section 1 can be further provided with a cone-shaped feeding collar 17 rotatable by means of a second motor 15, which surrounds at least a portion of the screw-shaped section 5a of the core 5. The cone-shaped feeding collar 17 has its internal face preferably formed with a thread increasing towards the motor 13, whereby regulation of the rotation speeds regarding the threads of the feeding collar 17 and the core's 5 screw section 5b can be applied to make a difference in the qualities, such as e.g. the density, of a pipe section preform. The speeds can be unequal, in which case the inner and outer surfaces of a pipe section have densities which are different from each other (two-layer solution).

The smooth section 5b is slightly larger in diameter than the screw section 5a and heatable by means of induction elements 8 placed outside the same. When the smooth section 5b is heated by means of the induction elements 8, the result is a cured zone in an internal surface 7a of the pipe section preform 7, whereby the form of the pipe section preform's 7 inner bore is achieved.

Around the core 5 is a tubular external mould 6, which is also heatable. The mould 6 can be adjustable in diameter (fewer moulds) and heating is effected by electricity, e.g. by means of resistance tubes 9. While a thin layer of the pipe section preform's 7 internal surface 7a is being cured by the core's 5 heatable section 5b, the same occurs on an external surface 7b of the pipe section preform 7 by virtue of a heatable external mould. Thereby, the pipe section preform 7 is set in a permanent form, even though the raw material is still predominantly uncured. The objective is a quick formation of the pipe section preform 7, with more time available for actual curing. Hence, the result is a continuous pipe section preform 7, i.e. no waste is produced and the product may vary in length as desired. Each inner diameter of a pipe section to be manufactured needs its specific core 5 and the outer diameters require a certain number of adjustable external moulds 6. The core 5 and the external mould 6 are independent components, which can be replaced jointly or separately.

The actual curing is effected by microwave technology. The application of microwave technology offers two options: delivering the waves in from both ends of the pipe section preform 7 (i.e. lengthwise of the preform 7) or delivering the waves crosswise relative to the proceeding direction of a pipe section (direction y) while the pipe section preform 7 is advancing all the time in direction x. If the endwise delivery is used, batch curing comes into question, wherein several preforms, which are considerably longer than current pipe sections, are subjected to curing at one time. In the process of crosswise curing, however, the product can be cut to its designated length immediately after curing and, hence, this curing option is more effective in terms of time and costs. The discussed process enables providing customer-specific products of designated length, the product length being standard today.

Curing is followed by coating, splitting and, if necessary, providing the pipe sections with tonguing and grooving (endwise and/or lengthwise). Finally, the pipe sections are transferred to a packing mechanism for packing and making finished pipe section products ready for shipping.

## Claims

1. A method for manufacturing a mineral wool pipe section for insulating purposes, in which method, for the forming of a substantially tubular insulation preform, wool (4) in the form of loose material is fed into a space between a core (5) and a substantially tubular external mould (6) surrounding it, **characterized in that** for the purpose of establishing the form of the pipe section preform (7), its internal and external surfaces (7a and 7b) are cured by heating at least a portion of the core (5) and the external mould (6), wherein curing the internal surface (7a) of the pipe section preform (7) is performed by heating the core (5) through induction and curing the external surface (7b) is performed by heating the external mould (6) through the use of electrical resistances and that this is followed by curing a layer still remaining uncured between the cured internal and external surfaces, wherein the final curing of the still uncured intermediate layer, effected after curing the internal and external surfaces (7a and 7b), is performed by means of microwave curing.

2. A method as set forth in claim 1, **characterized in that** the wool (4) in the form of loose material comprises wool shredded from a wool mat directly emerging from a basic wool processing line.

3. A method as set forth in claim 1 or 2, **characterized in that** the wool (4) in the form of loose material comprises wool shredded from rolls of uncured wool (2).

4. A method as set forth in any of claims 1-3, **characterized in that** the feeding of wool into the space between the core (5) and the external mould (6) is performed by means of gravity and/or screw feeding and/or blowing.

5. A method as set forth in claim 4, **characterized in that**, prior to being fed into the space between the core (5) and the external mould (6), the wool is compressed to a desired density between a feed screw (5a) and a feeding collar (17) covering at least part of the feed screw and provided with an internal thread.

6. A method as set forth in claim 5, **characterized in that** the desired density is achieved by adjusting the rotation speeds of the feed screw (5a) and the feeding collar.

7. A method as set forth in any of claims 1-6, with curing effected by microwaves, **characterized in that** the microwaves are delivered crosswise relative to the traveling direction of the pipe section as the pipe section preform (7) is proceeding forward along the pipe section forming section (1).

8. A method as set forth in any of claims 1-7, **characterized in that** the cured tubular preform is cut to its designated length immediately after final curing.

9. A method as set forth in any of claims 1-8, **characterized in that**, after cutting, the tubular preform is coated and/or split and/or, if necessary, provided with tonguing and grooving endwise and/or lengthwise and/or provided with a lengthwise extending internal cut.

10. A method as set forth in any of claims 1-6, with curing effected by microwaves, **characterized in that** the microwaves are delivered inside the pipe section preform from both ends thereof.

11. A method as set forth in claim 10, **characterized in that** several pipe sections are cured simultaneously.

12. A method as set forth in any of claims 1-8, **characterized in that** the method is operated as a continuous process.

13. A pipe section forming apparatus for making mineral wool pipe sections for insulating purposes, which apparatus comprises a pipe section forming section, consisting of a core (5) and of a substantially tubular external mould (6) surrounding it, whereby wool in the form of loose material is feedable into the space between these for forming a pipe section, **characterized in that** at least a part of the core (5) and the external mould (6) being arranged heatable so, that the form of the pipe section preform (7) establishable by curing its inner and outer surfaces (7a) and (7b) by heating at least a part of the core (5) and the external mould (6), wherein for the purpose of heating the heatable portion of the core (5), there are induction heating elements (8) disposed in such a manner outside the tubular external mould (6) that the core (5) has its heatable portion located between the induction heating elements (8) and for heating a heatable portion of the external mould (6), there are electrical heating elements (9) disposed in such a manner outside the tubular external mould (6) that the external mould (6) is located between the electrical heating elements (9) and that the apparatus for the purpose of the final curing of the pipe section to be formed further comprises elements for final curing by microwave curing.

14. An apparatus as set forth in claim 13, **characterized in that** the pipe section forming section (1) is provided with microwave elements (10) for the final curing of a pipe section to be formed, such that the external mould (6) is located between the microwave elements (10).

15. An apparatus as set forth in claim 13 or 14, **characterized in that** the core (5) of the pipe section forming section (1) is screw-shaped in its initial section (5a) and smooth in its final section (5b).

16. An apparatus as set forth in claim 15, **characterized in that** the smooth final section (5b) is slightly larger in diameter than the screw-shaped section (5a).

17. An apparatus as set forth in any of claims 13-16, **characterized in that** the pipe section preform is continuously advanceable along the screw-shaped initial section (5a).

18. An apparatus as set forth in any of claims 15-17, **characterized in that** at least a portion of the screw-shaped section (5a) is surrounded by a feeding collar (17) provided with an internal thread, the wool to be fed into the space between the core (5) and the external mould (6) being compressed to a desired density by feeding the wool through between the screw-shaped section (5a) and the feeding collar.

19. An apparatus as set forth in claim 18, **characterized in that** a desired density is achieved by adjusting the rotation speeds of the feed screw (5a) and the feeding collar.

20. An apparatus as set forth in any of claims 13-19, **characterized in that** the external mould (6) has a diameter which is adjustable.

21. An apparatus as set forth in any of claims 13-20, **characterized in that** the apparatus is provided with a shredder (3), which shreds roll(s) of uncured wool being fed therein, or wool being fed therein in the form of a mat emerging directly from a basic wool processing line, into wool (4) in the form of loose material.

22. An apparatus as set forth in claim 21, **characterized in that** the feeding of wool to the shredder (3) is adapted to proceed on conveyors, preferably e.g. on conveyor belts.

23. An apparatus as set forth in claim 21 or 22, **characterized in that** the feeding of wool to the pipe section forming section (1) is adapted to proceed by way of a feeding bin (12) arranged between the wool mat shredder (3) and the pipe section forming section (1) or through at least one feeding channel (14), such that the wool is fed by means of gravity and/or blowing and/or a screw (5a).

24. The use of an apparatus as set forth in any of claims 13-2 for implementing a method as set forth in any of claims 1-12.

## Patentansprüche

1. Verfahren zur Herstellung eines Rohrabschnitts aus Mineralwolle für Isolierzwecke, wobei bei diesem Verfahren zum Bilden einer im Wesentlichen rohrförmigen Isolations-Vorform Wolle (4) in der Form von Schüttgut in einen Raum zwischen einem Kern (5) und einer diesen umgebenden, im Wesentlichen rohrförmigen Außenform (6) eingeführt wird, **dadurch gekennzeichnet, dass** zum Zwecke der Herstellung der Form der Rohrabschnitts-Vorform (7) deren Innen- und Außenfläche (7a und 7b) gehärtet werden, indem mindestens ein Abschnitt des Kerns (5) und der Außenform (6) erwärmt wird, wobei das Härten der Innenfläche (7a) der Rohrabschnitts-Vorform (7) durchgeführt wird, indem der Kern (5) durch Induktion erwärmt wird, und das Härten der Außenfläche (7b) durchgeführt wird, indem die Außenform (6) durch die Verwendung von elektrischen Widerständen erwärmt wird, und dass hierauf das Härten einer noch ungehärtet gebliebenen Schicht zwischen der gehärteten Innen- und der gehärteten Außenfläche folgt, wobei das endgültige Härten der noch ungehärteten Zwischenschicht, das nach dem Härten der Innen- und der Außenfläche (7a und 7b) bewirkt wird, mittels Mikrowellenhärtung durchgeführt wird.

2. Verfahren nach Anspruch 1, **dadurch gekennzeichnet, dass** die Wolle (4) in der Form von Schüttgut Wolle umfasst, die durch Zerkleinern einer Wollematte erhalten wurde, die direkt von einer einfachen Wollverarbeitungsanlage kommt.

3. Verfahren nach Anspruch 1 oder 2, **dadurch gekennzeichnet, dass** die Wolle (4) in der Form von Schüttgut Wolle umfasst, die durch Zerkleinern von Rollen von ungehärteter Wolle (2) erhalten wurde.

4. Verfahren nach einem der Ansprüche 1-3, **dadurch gekennzeichnet, dass** das Einführen von Wolle in den Raum zwischen dem Kern (5) und der Außenform (6) mittels Schwerkraft und/oder Schneckenzuführung und/oder Blasen durchgeführt wird.

5. Verfahren nach Anspruch 4, **dadurch gekennzeichnet, dass** die Wolle, bevor sie in den Raum zwischen dem Kern (5) und der Außenform (6) eingeführt wird, zwischen einer Zuführschnecke (5a) und einer Zuführhülse (17), die wenigstens einen Teil der Zuführschnecke bedeckt und mit einem Innengewinde versehen ist, bis zu einer gewünschten Dichte zusammengepresst wird.

6. Verfahren nach Anspruch 5, **dadurch gekennzeichnet, dass** die gewünschte Dichte erreicht wird, indem die Drehzahlen der Zuführschnecke (5a) und der Zuführhülse eingestellt werden.

7. Verfahren nach einem der Ansprüche 1-6, mit durch Mikrowellen bewirktem Härten, **dadurch gekennzeichnet, dass** die Mikrowellen quer zu der Bewegungsrichtung des Rohrabschnitts ausgesendet werden, wenn sich die Rohrabschnitts-Vorform (7) entlang des Rohrabschnitts-Formungsabschnitts (1) vorwärts bewegt.

8. Verfahren nach einem der Ansprüche 1-7, **dadurch gekennzeichnet, dass** die gehärtete rohrförmige Vorform unmittelbar nach dem endgültigen Härten auf ihre festgelegte Länge zugeschnitten wird.

9. Verfahren nach einem der Ansprüche 1-8, **dadurch gekennzeichnet, dass** nach dem Zuschneiden die rohrförmige Vorform beschichtet und/oder geteilt und/oder, falls erforderlich, stirnseitig und/oder längsseitig mit Nut und Feder versehen und/oder mit einem sich längs erstreckenden inneren Einschnitt versehen wird.

10. Verfahren nach einem der Ansprüche 1-6, mit durch Mikrowellen bewirktem Härten, **dadurch gekennzeichnet, dass** die Mikrowellen innerhalb der Rohrabschnitts-Vorform von beiden Enden derselben aus ausgesendet werden.

11. Verfahren nach Anspruch 10, **dadurch gekennzeichnet, dass** mehrere Rohrabschnitte gleichzeitig gehärtet werden.

12. Verfahren nach einem der Ansprüche 1-8, **dadurch gekennzeichnet, dass** das Verfahren als ein kontinuierlicher Prozess durchgeführt wird.

13. Formvorrichtung für Rohrabschnitte zum Herstellen von Rohrabschnitten aus Mineralwolle für Isolierzwecke, wobei die Vorrichtung einen Rohrabschnitt-Formabschnitt umfasst, der aus einem Kern (5) und einer diesen umgebenden, im Wesentlichen rohrförmigen Außenform (6) besteht, wobei Wolle in der Form von Schüttgut zum Formen eines Rohrabschnitts in den dazwischen befindlichen Raum einführbar ist, **dadurch gekennzeichnet, dass** mindestens ein Teil des Kerns (5) und der Außenform (6) erwärmbar so angeordnet ist, dass die Form der Rohrabschnitts-Vorform (7) herstellbar ist, indem deren Innen- und Außenfläche (7a) und (7b) gehärtet werden, indem mindestens ein Teil des Kerns (5) und der Außenform (6) erwärmt wird, wobei zum Zwecke des Erwärmens des erwärmbaren Abschnitts des Kerns (5) Induktionsheizelemente (8) auf eine solche Weise außerhalb der rohrförmigen Außenform (6) angeordnet sind, dass sich der erwärmbare Abschnitt des Kerns (5) zwischen den Induktionsheizelementen (8) befindet, und wobei zum Erwärmen eines erwärmbaren Abschnitts der Außenform (6) elektrische Heizelemente (9) auf eine solche Weise außerhalb der rohrförmigen Außenform (6) angeordnet sind, dass sich die Außenform (6) zwischen den elektrischen Heizelementen (9) befindet, und dadurch, dass die Vorrichtung zum Zwecke des endgültigen Härtens des zu formenden Rohrabschnitts ferner Elemente für das endgültige Härten durch Mikrowellenhärtung umfasst.

14. Vorrichtung nach Anspruch 13, **dadurch gekennzeichnet, dass** der Rohrabschnitts-Formungsabschnitt (1) mit Mikrowellenelementen (10) zum endgültigen Härten eines zu formenden Rohrabschnitts versehen ist, so dass sich die Außenform (6) zwischen den Mikrowellenelementen (10) befindet.

15. Vorrichtung nach Anspruch 13 oder 14, **dadurch gekennzeichnet, dass** der Kern (5) des Rohrabschnitts-Formungsabschnitts (1) schraubenförmig in seinem Anfangsabschnitt (5a) und glatt in seinem Endabschnitt (5b) ist.

16. Vorrichtung nach Anspruch 15, **dadurch gekennzeichnet, dass** er glatte Endabschnitt (5b) einen etwas größeren Durchmesser aufweist als der schraubenförmige Abschnitt (5a) .

17. Vorrichtung nach einem der Ansprüche 13-16, **dadurch gekennzeichnet, dass** die Rohrabschnitts-Vorform entlang des schraubenförmigen Anfangsabschnitts (5a) kontinuierlich vorwärts bewegt werden kann.

18. Vorrichtung nach einem der Ansprüche 15-17, **dadurch gekennzeichnet, dass** mindestens ein Teil des schraubenförmigen Abschnitts (5a) von einer Zuführhülse (17) umgeben ist, die mit einem Innengewinde versehen ist, wobei die Wolle, die in den Raum zwischen dem Kern (5) und der Außenform (6) eingeführt werden soll, durch Hindurchführen der Wolle zwischen dem schraubenförmigen Abschnitt (5a) und der Zuführhülse bis zu einer gewünschten Dichte zusammengepresst wird.

19. Vorrichtung nach Anspruch 18, **dadurch gekennzeichnet, dass** eine gewünschte Dichte erreicht wird, indem die Drehzahlen der Zuführschnecke (5a) und der Zuführhülse eingestellt werden.

20. Vorrichtung nach einem der Ansprüche 13-19, **dadurch gekennzeichnet, dass** die Außenform (6) einen Durchmesser aufweist, welcher einstellbar ist.

21. Vorrichtung nach einem der Ansprüche 13-20, **dadurch gekennzeichnet, dass** die Vorrichtung mit einem Schredder (3) versehen ist, welcher (eine) Rolle(n) von ungehärteter Wolle, die in ihn eingeführt wird, oder Wolle, die in ihn in der Form einer Matte eingeführt wird, die direkt von einer einfachen Wollverarbeitungsanlage kommt, zu Wolle (4) in der Form von Schüttgut zerkleinert.

22. Vorrichtung nach Anspruch 21, **dadurch gekennzeichnet, dass** das Zuführen von Wolle zu dem Schredder (3) derart eingerichtet ist, dass es auf Förderern erfolgt, vorzugsweise z.B. auf Förderbändern.

23. Vorrichtung nach einem der Ansprüche 21 oder 22, **dadurch gekennzeichnet, dass** das Zuführen von Wolle zu dem Rohrabschnitt-Formabschnitt (1) derart eingerichtet ist, dass es mittels eines Aufgabebehälters (12) erfolgt, der zwischen dem Wollematten-Schredder (3) und dem Rohrabschnitt-Formabschnitt (1) angeordnet ist, oder durch mindestens einen Zuführkanal (14) hindurch, so dass die Wolle durch mittels Schwerkraft und/oder Blasen und/oder eine Schnecke (5a) zugeführt wird.

24. Verwendung einer Vorrichtung nach einem der Ansprüche 13-23 zum Implementieren eines Verfahrens nach einem der Ansprüche 1-12.

## Revendications

1. Procédé de fabrication d'une section de tuyau en laine minérale à des fins d'isolation, dans lequel procédé, pour former une préforme d'isolation essentiellement tubulaire, de la laine (4) sous forme de matériau libre est alimentée dans un espace entre un noyau (5) et un moule extérieur essentiellement tubulaire (6) l'entourant, **caractérisé en ce que** pour établir la forme de la préforme de section de tuyau (7), ses surfaces intérieure et extérieure (7a et 7b) sont traitées en chauffant au moins une partie du noyau (5) et du moule extérieur (6), dans lequel le traitement de la surface intérieure (7a) de la préforme de section de tuyau (7) est effectué en chauffant le noyau (5) par induction et le traitement de la surface extérieure (7b) est effectué en chauffant le moule extérieur (6) par l'utilisation de résistances électriques, et **en ce que** cela est suivi par le traitement d'une couche restante non encore traitée entre les surfaces intérieure et extérieure traitées, dans lequel le traitement final de la couche non encore traitée, effectué après le traitement des surfaces intérieure et extérieure (7a et 7b), est effectué au moyen d'un traitement par micro-ondes.

2. Procédé selon la revendication 1, **caractérisé en ce que** la laine (4) sous forme de matériau libre comprend de la laine broyée d'un tapis de laine émergeant directement d'une ligne basique de traitement de la laine.

3. Procédé selon la revendication 1 ou 2, **caractérisé en ce que** la laine (4) sous forme de matériau libre comprend de la laine broyée de rouleaux de laine non traitée (2).

4. Procédé selon l'une quelconque des revendications 1 à 3, **caractérisé en ce que** l'alimentation de la laine dans l'espace entre le noyau (5) et le moule extérieur (6) est effectuée par gravité et/ou par alimentation par vis sans fin et/ou par soufflage.

5. Procédé selon la revendication 4, **caractérisé en ce qu'**avant d'être alimentée dans l'espace entre le noyau (5) et le moule extérieur (6), la laine est comprimée à une densité désirée entre une vis d'alimentation (5a) et un collier d'alimentation (17) couvrant au moins une partie de la vis d'alimentation et doté d'un filetage femelle.

6. Procédé selon la revendication 5, **caractérisé en ce que** la quantité désirée est obtenue en réglant les vitesses de rotation de la vis d'alimentation (5a) et du collier d'alimentation.

7. Procédé selon l'une quelconque des revendications 1 à 6, avec traitement effectué par micro-ondes, **caractérisé en ce que** les micro-ondes sont fournies de manière transversale par rapport à la direction de déplacement de la section de tuyau lorsque la préforme de section de tuyau (7) avance le long de la section de fabrication de section de tuyau (1).

8. Procédé selon l'une quelconque des revendications 1 à 7, **caractérisé en ce que** la préforme tubulaire traitée est découpée à sa longueur désignée immédiatement après le traitement final.

9. Procédé selon l'une quelconque des revendications 1 à 8, **caractérisé en ce qu'**après la découpe, la préforme tubulaire est revêtue et/ou fendue et/ou si nécessaire, dotée d'une languette et d'une rainure aux extrémités et/ou sur la longueur et/ou dotée d'une découpe intérieure s'étendant sur la longueur.

10. Procédé selon l'une quelconque des revendications 1 à 6, avec traitement effectué par micro-ondes, **caractérisé en ce que** les micro-ondes sont fournies à l'intérieur de la préforme de section de tuyau depuis les deux extrémités de celle-ci.

11. Procédé selon la revendication 10, **caractérisé en ce que** plusieurs sections de tuyau sont traitées simultanément.

12. Procédé selon l'une quelconque des revendications 1 à 8, **caractérisé en ce que** le procédé est effectué en continu.

13. Appareil de fabrication d'une section de tuyau pour fabriquer des sections de tuyau en laine minérale à des fins d'isolation, lequel appareil comprend une section de fabrication de section de tuyau, consistant en un noyau (5) et un moule extérieur essentiellement tubulaire (6) l'entourant, sachant que de la laine sous forme de matériau libre peut être alimentée dans l'espace entre eux pour former une section de tuyau, **caractérisé en ce qu'**au moins une partie du noyau (5) et du moule extérieur (6) est agencée en pouvant être chauffée de manière à ce que la forme de la préforme de section de tuyau (7) puisse être établie en traitant ses surfaces intérieure et extérieure (7a et 7b) en chauffant au moins une partie du noyau (5) et du moule extérieur (6), dans lequel, dans le but de chauffer la partie pouvant être chauffée du noyau (5), des éléments de chauffage par induction (8) sont disposés de telle sorte hors du moule extérieur tubulaire (6) que le noyau (5) a sa partie pouvant être chauffée située entre les éléments de chauffage par induction (8), et pour chauffer une partie pouvant être chauffée du moule extérieur (6), des éléments de chauffage électriques (9) sont disposés de telle sorte hors du moule extérieur tubulaire (6) que le moule extérieur (6) est situé entre les éléments de chauffage électriques (9) et que l'appareil, dans le but du traitement final de la section de tuyau à former comprend en outre des éléments pour le traitement final par micro-ondes.

14. Procédé selon la revendication 13, **caractérisé en ce que** la section de fabrication de section de tuyau (1) est dotée d'éléments de micro-ondes (10) pour le traitement final d'une section de tuyau à former, de telle sorte que le moule extérieur (6) soit situé entre les éléments de micro-ondes (10).

15. Procédé selon la revendication 13 ou 14, **caractérisé en ce que** le noyau (5) de la section de fabrication de section de tuyau (1) est en forme de vis dans sa section initiale (5a) et lisse dans sa section finale (5b).

16. Procédé selon la revendication 15, **caractérisé en ce que** la section finale (5b) lisse est légèrement plus large en diamètre que la section (5a) en forme de vis.

17. Appareil selon l'une quelconque des revendications 13 à 16, **caractérisé en ce que** la préforme de section de tuyau peut avancer en continu le long de la section initiale (5a) en forme de vis.

18. Appareil selon l'une quelconque des revendications 15 à 17, **caractérisé en ce qu'**au moins une partie de la section initiale (5a) en forme de vis est entourée d'un collier d'alimentation (17) doté d'un filetage femelle, la laine à alimenter dans l'espace entre le noyau (5) et le moule extérieur (6) étant comprimée à une quantité désirée en alimentant la laine au travers entre la section initiale (5a) et le collier d'alimentation.

19. Procédé selon la revendication 18, **caractérisé en ce qu'**une densité désirée est obtenue en réglant les vitesses de rotation de la vis d'alimentation (5a) et du collier d'alimentation.

20. Appareil selon l'une quelconque des revendications 13 à 19, **caractérisé en ce que** le moule extérieur (6) présente un diamètre ajustable.

21. Appareil selon l'une quelconque des revendications 13 à 20, **caractérisé en ce que** l'appareil est doté d'un broyeur (3) qui broie un/des rouleau(x) de laine non traitée en train d'être alimenté(s) dedans, ou de la laine en train d'être alimentée dedans sous forme d'un tapis émergeant directement d'une ligne basique de traitement de la laine, en laine (4) sous forme de matériau libre.

22. Procédé selon la revendication 21, **caractérisé en ce que** l'alimentation de la laine vers le broyeur (3) est adaptée pour s'effectuer sur des convoyeurs, de préférence par exemple sur des courroies de convoyeur.

23. Appareil selon la revendication 21 ou 22, **caractérisé en ce que** l'alimentation de la laine de la section de fabrication de section de tuyau (1) est adaptée pour s'effectuer via une benne d'alimentation (12) agencée entre le broyeur (3) de tapis de laine et la section de fabrication de section de tuyau (1) ou à travers au moins un canal d'alimentation (14), de telle sorte que la laine est alimentée par gravité et/ou par soufflage et/ou par une vis (5a) .

24. Utilisation de l'appareil selon l'une quelconque des revendications 13 à 23, pour mettre en place un procédé selon l'une quelconque des revendications 1 à 12.
